# EUROPÄISCHE PATENTSCHRIFT

(11) **EP 1 079 099 B1**
(45) Veröffentlichungstag und Bekanntmachung des Hinweises auf die Patenterteilung: **19.01.2005**
(21) Anmeldenummer: 00118016.5
(22) Anmeldetag: 22.08.2000
(51) Int. Cl.: F02M 51/06, F16K 31/00, F02M 61/08, F02M 61/16, F02M 59/46

(54) **Einspritzventil**
Injection valve
Injecteur

(30) Priorität: 24.08.1999 DE 19940054
(43) Veröffentlichungstag der Anmeldung: 28.02.2001
(73) Patentinhaber: SIEMENS AKTIENGESELLSCHAFT, 80333 München (DE)
(72) Erfinder: Kendlbacher, Christoph, Dr., 1090 Wien (AT); Kappel, Andreas, Dr., 85649 Brunntal (DE); Gottlieb, Bernhard, Dr., 81739 München (DE)

(56) Entgegenhaltungen:
- DE-A- 4 306 072
- DE-A- 19 646 847
- US-A- 4 550 744

## Beschreibung

Die Erfindung betrifft ein Einspritzventil für ein unter Druck stehendes Fluid, eine Flüssigkeit oder ein Gas. Insbesondere wird die Konstruktion eines Hochdruckeinspritzventils für Automotoren betrachten, das als Antriebselement einen piezoelektrischen Mehrlagenaktor (PMA) aufweist.

Bei der Konstruktion eines Hochdruckeinspritzventils sind eine Vielzahl von Problemen zu lösen:
- Der Piezoaktor muß zum Teil gegenüber dem druckbeaufschlagten Kraftstoff abgedichtet sein.
- Eine hinreichend hohe Druckvorspannung am PAM muß gewährleistet sein, um schädliche Zugspannungen am PMA zu verhindern, wie sie im hochdynamischen Betrieb eines PMA typischerweise auftreten und zur Zerstörung führen könnten.
- Verwendete Dichtelemente müssen eine hohe mechanische Nachgiebigkeit (geringe Federrate) in der Bewegungsrichtung aufweisen, um weder die Bewegung der Ventilnadel noch die Längenkompensation zu behindern. Bei einer Verschiebung des PMA durch thermische oder druckbedingte Längenänderungen sollen daher nur minimale Kräfte durch Dichtelemente auf die beweglichen Teile ausgeübt werden.
- Die Dichtelemente müssen hinreichend druckfest sein, beispielsweise für Kraftstoffdrücke von 200 bis 300 bar.
- Geeignete Kompensationen von druckbedingten Kräften müssen vorgesehen sein, wobei diese Kräfte direkt auf die Ventilnadel wirken oder die durch die mit der Ventilnadel mechanisch direkt verbundenen Elemente, wie die Dichtelemente.
- Es muß eine sehr hohe Zuverlässigkeit der Dichtelemente hinsichtlich einer Leckage garantiert sein, das heißt in den Dichtelementen auftretende mechanische Druck-/Zugspannungen müssen in einem materialverträglichen Bereich liegen, in dem die Dichtelemente lediglich elastisch reversibel verformt werden, beispielsweise im Bereich einer Dauerstandfestigkeit mit bis zum 10⁹ Lastzyklen.
- Die hydraulische Längenkompensation muß die Funktion des Dosierventils im typischen Temperaturintervall von -40° Celsius bis +150° Celsius gewährleisten.

Im Stand der Technik sind insbesondere in der EP 0 218 895 B1 selbsttätige Längenkompensationssysteme für thermische Dehnungen, Setzeffekte eines Piezoaktors oder Fertigungstoleranzen bekannt. In dieser europäischen Patentschrift wird ein Zumeßventil zur Dosierung von Flüssigkeiten oder Gasen beschrieben, wobei insbesondere Einspritzventile für Kraftstoffeinspritzsyteme betroffen sind, die direkt in einen Motorraum einspritzen. Das System mit einem piezoelektrischen Stellenglied generiert einen Hub- bzw. Stellweg durch die Expansion des Piezoaktors. Weiterhin weist das System eine gekapselte Flüssigkeitsdämpfung auf. Somit werden quasi statische Vorgänge wie Längenänderungen, Setzeffekte und Längenstreuungen durch eine hydraulische Kompensation abgefangen. Diese Eigenschaft erlaubt es in der Materialwahl auf teuere oder schwer bearbeitbare Legierungen mit geringer thermischer Dehnung, beispielsweise Invar, zu verzichten und zu wesentlich billigerem Material, beispielsweise Stahl mittlerer Festigkeit und einfacherer Bearbeitbarkeit überzugehen. Antriebsseitig können vorteilhafterweise alle bewegten Teile durch Verschweißen auf Anlage gehalten werden, so daß keine Hubverluste durch Spalte entstehen.

Die deutsche Offenlegungsschrift DE-A-43 06 072 offenbart ein Einspritzventil mit einem Piezoaktor, einem Druck- und einem Hubkolben zur Hubtransformation, einem Ventilstößel und einer Schließfeder zum Schließen des Ventiltellers im Ruhezustand. Die Bauart dieses Piezoeinspritzventils ist charakterisiert durch die Platzierung eines hydraulischen Übertragers zwischen Düsennadel und Piezoaktor. Der Erfindung liegt die Aufgabe zugrunde, ein Einspritzventil mit einer hydraulischen Längenkompensation derart auszuführen, daß im für die hydraulische Dämpfung vorgesehenen Hydraulikfluid keine Kavitation auftritt.

Die Längenkompensation in Form des hydraulischen Lagers sorgt für quasistatische Vorgänge, bei der schnellen Elongation eines Piezoaktors, beispielsweise zum kurzzeitigen Öffnen eines Ventils durch den entsprechenden Hub einer Ventilnadel. Lang-samere Vorgänge aufgrund von verschiedenen Wärmedehnungen können jedoch ausgeglichen werden, so daß das System Piezoaktor und Ventilnadel von einem ungefähr gleichen Grundzustand aus betätigt werden kann. Zu den ebenfalls quasistatischen Vorgängen ist der Vorgang der Kontraktion eines Piezoaktors bei seiner Entladung zu zählen. Für diesen Fall treten am Piezoaktor kurze Kontraktionen auf, die der Rückstellbewegung des Piezoaktors entsprechen. Entsprechend kann innerhalb des Hydraulikfluids eine Kavitation auftreten.

Die Lösung dieser Aufgabe geschieht durch die Kombination der Merkmale entsprechend Anspruch 1.

Vorteilhafte Ausgestaltungen können den Unteransprüchen entnommen werden.

Der Erfindung liegt die Erkenntnis zugrunde, daß das hydraulische Lager auch Zugkräfte aufnehmen muß, sich aber keinerlei Kavitation einstellen soll, da dies die Qualität des hydraulischen Lagers enorm verschlechtert.

Um dem entgegenzuwirken, wird entsprechend der Erfindung das Hydraulikfluid mit einem Vordruck beaufschlagt. Dies geschieht in dem Maße, daß auftretende Zugkräfte nicht zu einem Unterdruck führen können.

Es ist besonders vorteilhaft, das Hydraulikfluid hermetisch abzuschließen, so daß nicht das zu dosierende Fluid im Bereich des hydraulischen Lagers eingesetzt werden muß. Damit wird der Einsatz eines Hydraulikfluides ermöglicht, das optimale Hydraulikeigenschaften hat, wie beispielsweise eine niedrige Kompressibilität. Dabei ist es sehr vorteilhaft, ein Silikonöl einzusetzen.

Der Vordruck des Hydraulikfluides liegt vorteilhafterweise im Bereich von 1 bis 5 bar. Damit ist bei üblichen Dimensionierungen eines Dosierventils ein Druckbereich getroffen, der in der Regel eine Blasenbildung durch Kavitation im Hydraulikfluid verhindert.

Die Erzeugung eines Vordruckes innerhalb des Hydraulikfluides geschieht vorteilhafterweise durch einen Metallbalg, der gleichzeitig zur Abdichtung einer Hydraulikkammer dient. Da dieser Metallbalg Federeigenschaften aufweist, können die entsprechenden Federkraft gleichzeitig zur Erzeugung des entsprechenden Vordruckes verwendet werden. Reichen die Federkräfte des Metallbalges nicht aus, so wird zusätzlich eine Feder miteingesetzt.

Vorteilhafterweise kann ein Endstück des Piezoaktors mit der Ventilnadel verschweißt sein. Diese Maßnahme verhindert einen Hubverlust im System.

Im folgenden werden anhand von schematischen Figuren die Erfindung nicht einschränkende Ausführungsbeispiele beschrieben.
- Figur 1: zeigt ein Einspritzventil mit einem Piezoaktor, einer Ventilnadel und einem Hydraulikdämpfungssystem, wobei die Hydraulikkammer gegenüber dem Aktorraum im Bereich des Hydraulikkolbens abgedichtet ist,
- Figur 2: zeigt ein System entsprechend Figur 1, wobei im Gegensatz dazu die Ventilnadel und der Piezoaktor nicht fest miteinander verbunden sind,
- Figur 3: zeigt ein Einspritzventil entsprechend Figur 1, wobei die Verbindung zwischen der Hydraulikkammer und Ausgleichsraum über eine Systemdichtspalt-Ausgleichsbohrung geschieht,
- Figuren: 4 bis 8 zeigen jeweils die entsprechenden Querschnitte innerhalb einer Ventilkammer mit der entsprechenden konstruktiven Ausgestaltung der Ventilnadel.

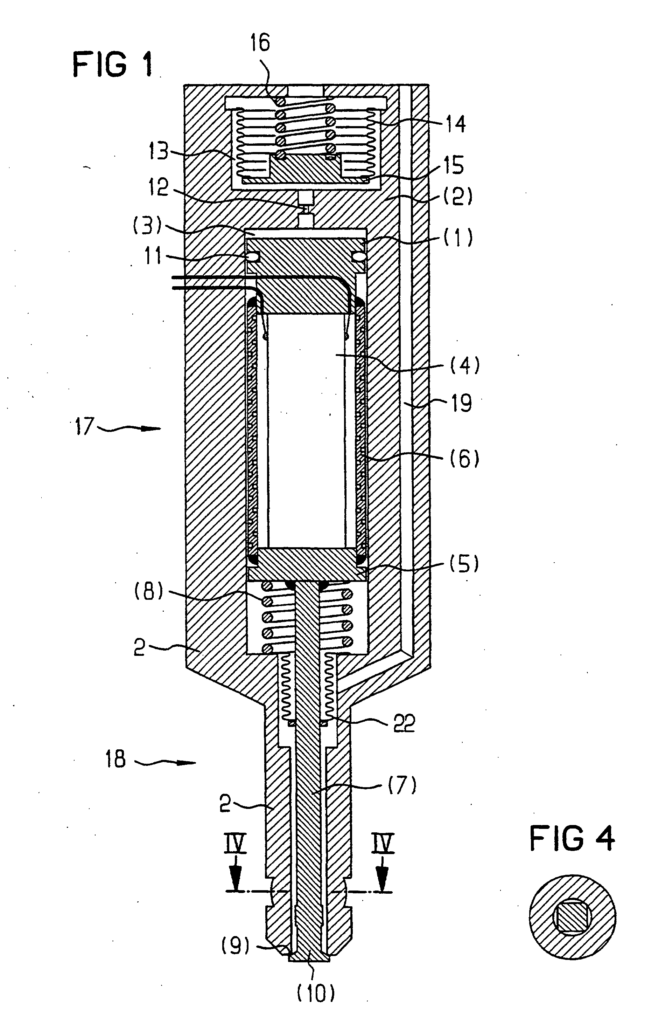

Figur 1 zeigt ein Einspritzventil mit einem hydraulischen Längenausgleichselement. Es besteht aus dem Hydraulikkolben 1, der Antriebseinheit, der zusammen mit dem Gehäuse 2 des Dosierventils eine Hydraulikkammer 3 bildet.

Die Antriebseinheit ihrerseits besteht aus einem piezoelektrischen Multilayeraktor (PMA) 4, der über den Hydraulikkolben 1 und die Fußplatte 5 unter hoher Druckvorspannung zur Vermeidung schädlicher Zugspannungen innerhalb des Piezoaktors 4 eingeschweißt ist. Derartige Zugspannungen können bei einer schnellen Ansteuerung des PMA 4 auftreten, was durch die Verschweißung innerhalb dieser Rohrfeder 6 aufgefangen wird. Um Prellvorgänge zwischen der Antriebseinheit und der Ventilnadel 7 zu vermeiden, ist es vorteilhaft, die Ventilnadel 7 mit der Fußplatt 5 zu verschweißen. Die Fußplatte 5 kann wahlweise so gestaltet sein, daß sie gemeinsam mit dem Ventilgehäuse als Führung für den Ventilnadelantrieb dient. Dies erfordert eine Führung der Fußplatte 5 innerhalb des Aktorraumes 17, wobei die Führung der Ventilnadel 7 entsprechend Figur 4 am äußeren unteren Ende der Ventilnadel 7 ausreicht. Diese Führung bewirkt eine Stabilisierung der Ventilnadel und ist möglichst nahe am Ventilteller 10 plaziert.

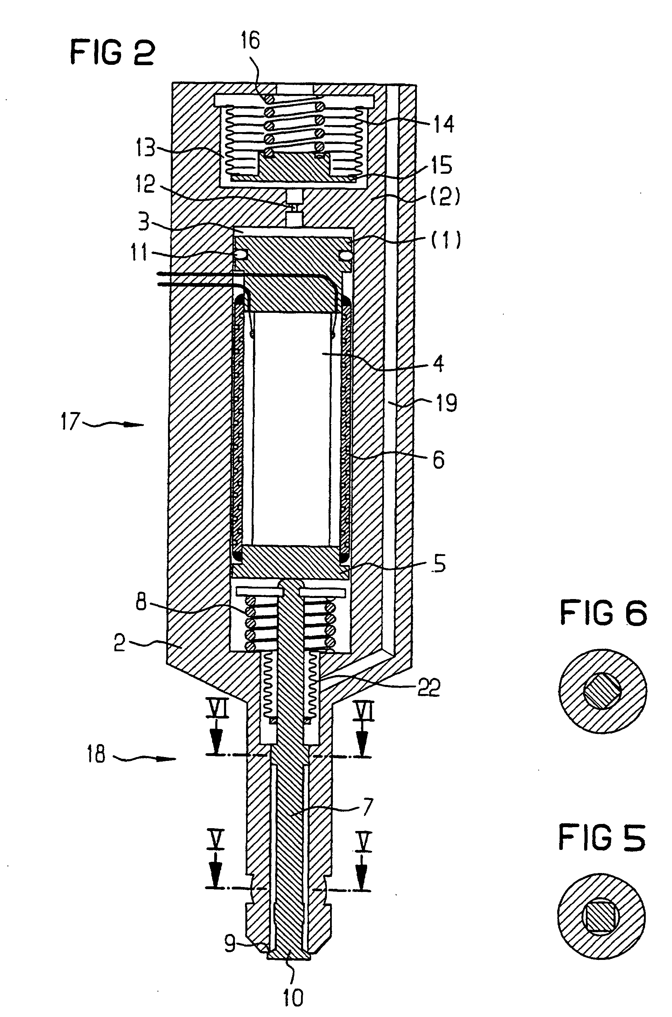

Montagetechnisch kann es notwendig sein, die Ventilnadel 7 und die Antriebseinheit entsprechend Figur 2 getrennt zu belassen. In diesem Fall wird die druckvorgespannte Rückstellfeder 8 anstatt wie in Figur 1 gezeigt, an ihrem oberen Ende gegen die Ventilnadel 7 abgestützt. Die Bewegung der Ventilnadel 7 wird dann wie in Figur 2 gezeigt, durch eine weitere Führung, die möglichst nahe am oberen Ende der Ventilnadel 7 lokalisiert ist, stabilisiert, siehe hierzu Figuren 5 und 6.

In den Ventilkörper ist ein Ventilsitz 9 eingearbeitet, der zusammen mit dem am unteren Ende der Ventilnadel 7 befindlichen Ventilteller 10 ein Tellerventil bildet. Die Führung entsprechend Figur 4 ist derart ausgebildet, daß sie bei geöffnetem Tellerventil den Flüssigkeitsstrom nicht drosselt. Die vorgespannte Rückstellfeder 8 hält das Tellerventil im Ausgangszustand des Injektors geschlossen. Zum Abschluß eines Einspritzvorganges, wenn der PMA 4 über seine elektrischen Anschlüsse entladen und kontrahiert wird, wird durch die Kraft der Rückstellfeder 8 das Tellerventil geschlossen. Die Hydraulikkammer 3 ist zur Antriebsseite hin über eine enge Spielpassung zwischen dem Hydraulikkolben 1 und der Wand des Aktorraumes 17, der Gehäuseinnenwand, sowie durch ein axial flexibles oder verschiebbares, hermetisch dichtendes Niederdruckdichtelement abgeschlossen. Das Dichtelement 11 muß lediglich einem Niederdruck standhalten, so daß es beispielsweise als O-Ring, als Dichtmembrane, oder als ein Metallbalg ausgeführt sein kann.

Die Hydraulikkammer 3 steht über eine Drosselblende 12 mit einem Ausgleichsraum 13 in Verbindung. Dieser wird durch das Gehäuse 2 und eine flexible hermetisch dichte Abdichtung in Form eines Metallbalges 14 nach außen hin gebildet. Die flexible Abdichtung kann beispielsweise wie in Figur 1 gezeigt, durch einen Metallbalg 14 dargestellt werden, der mit einer Abschlußscheibe 15 an einem Ende und von anderen Ende mit dem Gehäuse verschweißt ist. Es kann beispielsweise auch eine Metall-, Gummi- oder Kunststoffmembrane zum Einsatz kommen, da es sich lediglich um flexible Niederdruckabdichtungen handelt. Das Ausgleichsvolumen des Ausgleichsraumes 13 könnte auch durch einen Kolben mit O-Ringdichtung abgeschlossen werden.

Die Hydraulikkammer 3, der Ausgleichsraum 13 und die Drosselblende 12 sind im Grundzustand des Dosierventils blasenfrei mit einem Hydraulikfluid gefüllt. Das Hydraulikfluid wird wie in Figur 1 gezeigt, beispielsweise durch eine weiche Druckfeder 16 unter einen geringen Vordruck von ca. 1 bis 5 bar versetzt. Die Druckfeder 16 ist zwischen dem Gehäuse und der Abschlußscheibe 15 eingespannt. Wenn die Federwirkung des Dicht elementes selbst ausreicht, um das Hydraulikfluid hinreichen vorzuspannen, kann auf eine zusätzliche Feder 16 verzichtet werden. Durch den Vordruck auf das Hydraulikfluid wird eine das Dosierventil öffnende Kraft über die Antriebseinheit auf die Ventilnadel 7 ausgeübt. Diese Kraft muß zusätzlich durch die Rückstellfeder 8 zur benötigten Ventilschließkraft aufgebracht werden. Der Vordruck ist nötig, um schädliche Kavitation in der Hydraulikkammer 3 zu vermeiden. Weiterhin soll eine kleine Hydraulikfluidmenge, die während der Öffnungsphase des Dosierventils aus der Hydraulikkammer 3 durch die Drosselblende in den Ausgleichsraum gedrängt wird, während der Phase, in der das Einspritzventil geschlossen ist, wieder zurück in die Hydraulikkammer 3 geführt werden. Dabei wird die Antriebseinheit wieder in die Ausgangsposition gebracht.

Zur Wirkungsweise insbesondere der Hydraulikkammer des hydraulischen Längenausgleichselements ist folgendes zu sagen.

Das Längenausgleichselement soll innerhalb typischer Einspritzzeiten von beispielsweise 1 bis 5 ms als steifes Lager wirken. Die Kraft der Rückstellfeder 8 von ca. 50 bis 150 N und zusätzlich die auftretenden Beschleunigungskräfte, die während des Öffnens und des Schließens des Ventils innerhalb der Schaltzeit wirken, soll das Längenausgleichselement ohne nennenswerten Einfluß auf die Höhe der Hydraulikkammer 3 aufnehmen. Die Schaltzeiten liegen typischerweise im Bereich von 100 µs bis 200 µs.

Thermische Längenänderungen hingegen, die in Zeitspannen von etlichen Sekunden bis Minuten stattfinden, soll das Ausgleichselement durch Austausch von Hydraulikfluid mit dem Ausgleichsraum 13 abfangen. Dazu ist es nötig, die Drosselblende 12 derart auszulegen, daß binnen typischer Einspritzzeiten (1 ms bis 5 ms) praktisch kein Fluidaustausch stattfinden kann. Andererseits soll der Fluidaustausch aber binnen typischer Zeiten für thermische Längenänderungen ungehindert stattfinden.

Die Hydraulikkammer 3 besitzt aufgrund der Kompressibilität des Hydraulikfluides eine Steifigkeit, die um so höherer ist, je geringer die Höhe der Hydraulikkammer 3 ausgelegt ist. Daher sollte die Hydraulikkammer nicht höher als zum Ausgleich von Fertigungstoleranzen und thermischen Längenänderungen unbedingt nötig ausgelegt werden. Auch sollte das Ausgleichsvolumen so gering wie möglich gehalten werden, damit die zusätzlichen thermische Volumenänderung des Hydraulikfluides über den typischen Temperaturbereich von -40° bis +150° Celsius möglichst gering gehalten wird und vom flexiblen Dichtelement, dem Metallbalg 14, ohne nennenswerte Druckänderung im Hydraulikfluid abgefangen wird.

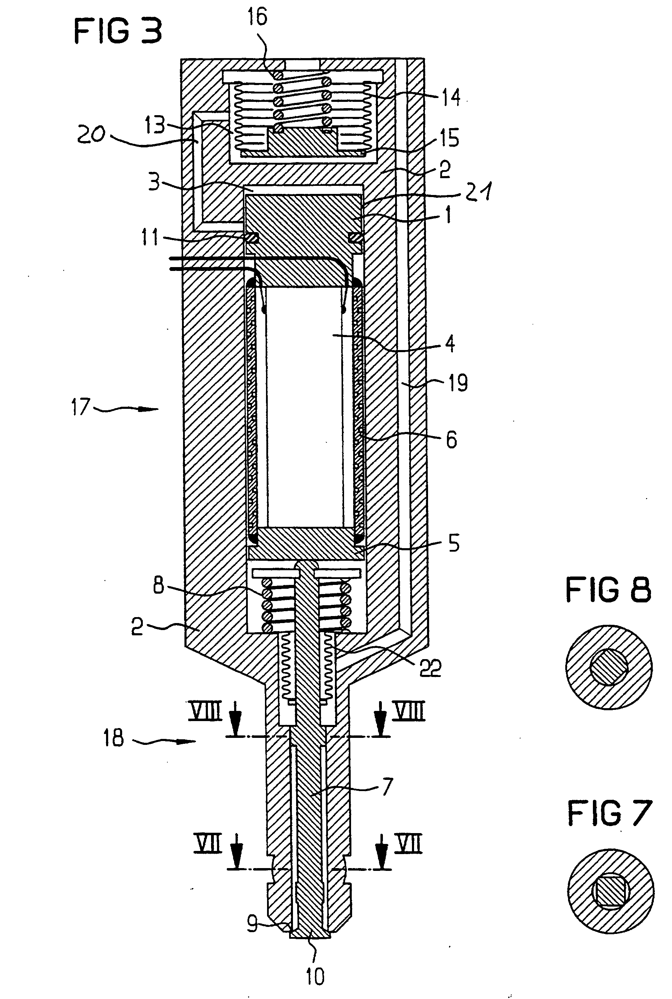

In den Figuren 1 bis 3 ist durchgehend die Hydraulikkammer 3 gegenüber dem Aktorraum 17 abgedichtet. In Figur 3 wird eine Variante zu den Figuren 1 und 3 gezeigt, die auf eine Drosselblende 12 innerhalb des Gehäuses verzichtet. In dem Fall der Figur 3 wird durch den Dichtspalt 21 und die Ausgleichsbohrung 20 die oben beschriebene gewünschte Charakteristik des hydraulischen Lagers erzielt. In den Figuren 1-3 ist insgesamt zu erkennen, daß der Bereich des Hydraulikfluides hermetisch abgedichtet ist. Die Fluid- bzw. Kraftstoffzuführung 19 mündet in den Ventilraum 18.

Der Ventilraum 18 ist wiederum gegenüber dem Aktorraum 17 abgedichtet. Dies geschieht mittels eines Federbalgs 22, vorzugsweise eines Metallbalgs. Bei Verwendung eines Federbalgs 22 kann durch eine Wahl eines hydraulischen Durchmessers eine zusätzliche Kraft auf die Ventilnadel 7 in Abhängigkeit von der Druckdifferenz zwischen Aktorraum 17 und Ventilraum 18 eingestellt werden. Wird beispielsweise der hydraulische Durchmesser entsprechend der Dichtlinie des Tellerventils gewählt, so wird eine Kompensation von Kräften eingestellt. Es kann aber durch relative Vergrößerung des hydraulischen Durchmessers eine zusätzliche Druckkraft auf die Ventilnadel 7 eingestellt werden.

Im Falle des Einsatzes einer Drosselblende 12 wird die Drosselwirkung überwiegend durch Turbulenzen erzeugt. Somit ist diese Funktion weitgehend unabhängig von der Viskosität des Hydraulikfluides und damit von der Temperatur. Die Viskosität von Hydraulikfluiden sinkt im kraftfahrzeugtechnisch relevanten Temperaturbereich von -40° bis + 150° Celsius typischerweise um den Faktor von 20 bis 50 bei Silikonölen und um einen Faktor von bis zu 100.000 bei Mineralölen. Im Gegensatz dazu dient in der Patentschrift EP 0 218 895 B1 und in Figur 3 der Ringspalt bzw. Dichtspalt 21 des Hydraulikkolbens 1 als Drosselelement. Die Drosselwirkung eines derartigen Ringspaltes ist direkt proportional zur Viskosität und daher in hohem Maße temperaturabhängig.

Das Speichervolumen für das Hydraulikfluid befindet sich auf der dem PMA abgewandten Seite des Ausgleichskolbens. Die Hydraulikkammer 3 ist zum Injektorinnenraum hin abgedichtet. Der PMA ist mit Hilfe einer Rohrfeder 6 druckvorgespannt.

Zur Auslegung der Hydraulikkammer 3 dienen folgende Abhängigkeiten. Der typische Durchmesser des Hydraulikkolbens 1 und der Hydraulikkammer 3 beträgt: dₖ=14mm. Die Kolbenfläche beträgt Ak=π·_{dk} ² /4 = 154 mm².
Die typische Kammerhöhe beträgt Hₖ=300 µm.
Eine typische Kompressibilität des Hydraulikfluides beträgt χ=1·10⁻⁹m²/N.
Die minimale Steifigkeit (Federkonstante) der Hydraulikkammer beträgt: cₖ=Aₖ/(χ·Hₖ)= 513 N/µm.
Die mittlere von der Hydraulikkammer 3 während des Einspritzvorganges zu tragende Kraft beträgt: F=200N.
Der ventilhubverlust aufgrund der Steifigkeit der Hydraulikkammer 3 beträgt typischerweise: dx₁=F/cₖ=0,4 µm.
Der mittlere Druckanstieg in der Hydraulikkammer 3 beträgt: ΔP=F/Aₖ= 13 bar.
Der erlaubte Hubverlust aufgrund des Fluidaustausches während des Einspritzvorganges beträgt: dx₂=1µm.
Die maximale Einspritzdauer beträgt: t=5ms.
Der maximal erlaubte mittlere Fluidstrom durch die Drosselblende 12 beträgt: Q=Aₖ·dx₂/t= 30,8 mm³/s.
Der Volumenstrom durch die Drossel berechnet sich gemäß: Q=α·π·d_{D} ² /4·(2·ΔP/ρ)1/2 mit einem typischen Drosselbeiwert von α=0,8. Die Dichte eines typischen Hydraulikfluides beträgt ρ=800 kg/m³. Daraus leitet sich der typische maximale Durchmesser der Drosselblende 12 ab: d_{D} =2(Q/(α·π·(2·ΔP/ρ)^{1/2} )^{1/2} = 30 µm.

Derartige Mikrobohrungen können beispielsweise mit Hilfe der Lasertechnik oder durch galvanisches Abscheiden von Nickel innerhalb von bestehenden Bohrungen genau und reproduzierbar hergestellt werden.

Bei allen Ausführungsformen kann selbstverständlich der Ausgleichsraum 13 auch außerhalb des Gehäuses 2 als separate, z. B. mittels fester Leitungen verbundener, Kammer ausgeführt sein. Auch kann statt eines Piezoaktors 4 ein anderer elektromechanischer Aktor, z. B. ein elektro- oder magnetostriktiver Aktor, verwendet werden.

## Patentansprüche

1. Einspritzventil für ein unter Druck stehendes Fluid bestehend aus einem Gehäuse (2) mit:
- einem Ventilraum (18) zur Aufnahme einer Ventilnadel (7), die zusammen mit der Gehäusewand ein Ventil darstellt, welches durch Federkräfte geschlossen und über eine Elongation eines druckvorgespannten Piezoaktors (4) und eine entsprechende Hubbewegung der Ventilnadel (7) zu öffnen ist,
- einem Aktorraum (17) zur Aufnahme des Piezoaktors (4), wobei ein in Längsrichtung des Piezoaktors (4) wirkender Hydraulikkolben (1) den Piezoaktor (4) an der der Ventilnadel (4) abgewandten Seite abstützt, zusammen mit dem Gehäuse (2) eine Hydraulikkammer (3) bildet und der Aktorraum (17) von einem Hydraulikfluid durch ein Dichtelement (11) abgedichtet ist,
- einem Ausgleichsraum (13), der mit der Hydraulikkammer (3) in Verbindung steht, wovon beide mit dem Hydraulikfluid gefüllt sind und die Verbindung durch eine Drosselblende (12) oder durch die Kombination eines Dichtspaltes (21) mit einer Ausgleichsbohrung (20) dargestellt ist, derart, daß das System Hydraulikkammer - Ausgleichsraum-Hydraulikfluid ein dynamisch steifes Lager für den Piezoaktor und ein Längenausgleichselement für zeitlich längere Vorgänge bildet, wobei das Hydraulikfluid unter Druck steht.

2. Einspritzventil nach Anspruch 1, wobei das Hydraulikfluid hermetisch abgeschlossen ist.

3. Einspritzventil nach einem der vorhergehenden Ansprüche, wobei das Hydraulikfluid ein Silikonöl ist.

4. Einspritzventil nach einem der vorhergehenden Ansprüche, wobei das Hydraulikfluid im Grundzustand blasenfrei ist.

5. Einspritzventil nach einem der vorhergehenden Ansprüche, wobei der Druck des Hydraulikfluides im Bereich von 1 bis 5 bar liegt.

6. Einspritzventil nach einem der vorhergehenden Ansprüche, wobei der Druck des Hydraulikfluides durch die Federeigenschaften eines Metallbalges (14) erbracht werden, der zur Abdichtung der Hydraulikkammer (13) dient.

7. Einspritzventil nach einem der vorhergehenden Ansprüche, wobei zur Aufbringung des Druckes zusätzlich eine Feder (16) vorhanden ist.

8. Einspritzventil nach einem der vorhergehenden Ansprüche, wobei die Höhe der Hydraulikkammer (3) in Längsrichtung des Piezoaktors (4) derart ausgelegt ist, daß die Summe von Fertigungstoleranzen und thermischen Längenänderungen durch die Hydraulikkammer (3) ausgleichbar ist.

9. Einspritzventil nach einem der vorhergehenden Ansprüche, wobei die Ventilnadel (7) mit einer Fußplatte (5) des Piezoaktors (4) verschweißt ist.

10. Einspritzventil nach einem der vorhergehenden Ansprüche, wobei der Piezoaktor (4) ein piezoelektrischer Mehrschichtaktor ist.

11. Einspritzventil nach einem der vorhergehenden Ansprüche, bei dem der Ventilraum (18) vom Aktorraum (17)mittels eines Federbalgs, insbesondere eines Metallbalgs (22), abgedichtet ist, der einerseits an der Ventilnadel (7) und andererseits am Gehäuse (2) angelenkt ist.

## Claims

1. An injection valve for a pressurized fluid, consisting of a housing (2) comprising:
- a valve space (18) for accommodating a valve needle (7) which , together with the wall of the housing , constitutes a valve which is closed by elastic forces and can be opene d by means of elongation of a precompressed piezo actuator (4) and a corresponding lifting movement of the valve needle (7) ,
- an actuator space (17) for accommodating the piezo actuator (4), wherein a hydraulic piston (1) , acting lengthwise along the piezo actuator (4), braces the piezo actuator (4) on the side opposite the valve needle (4) and forms, together with the hous ing (2), a hydraulic chamber (3), and the actuator space (17) is sealed from a hydraulic fluid by a sealing element (11),
- an equalizing space (13) which is connected to the hydraulic chamber (3), both of which are filled with the hydraulic fluid, and the connection is provided by a throttling orifice (12) or by the combination of a sealing gap (21) and an equalizing bore (20) such that the system of hydraulic chamber/ equalizing space/hydraulic fluid forms a dynamically rigid bearing for the piezo actuator and a length-compensating element for processes over longer time periods , wherein the hydraulic fluid is pressurized.

2. An injection valve according to Claim 1, wherein the hydraulic fluid is hermetically sealed.

3. An injection valve according to any one of the preceding Claims, wherein the hydraulic fluid is silicone oil.

4. An injection valve according to any one of the preceding Claims, wherein the hydraulic fluid in its initial state is bubble-free.

5. An injection valve according to any one of the preceding Claims, wherein the pressure of the hydraulic fluid lies in the range from 1 to 5 bar.

6. An injection valve according to any one of the preceding Claims, wherein the pressure of the hydraulic fluid is produced by the elastic characteristics of a metal bellows (14) which serves to seal the hydraulic chamber (13).

7. An injection valve according to any one of the preceding Claims, wherein there is additionally present a spring (16) for applying pressure.

8. An injection valve according to any one of the preceding Claims, wherein the height of the hydraulic chamber (3) lengthwise along the piezo actuator (4) is dimensioned such that the sum of manufacturing tolerances and thermal changes of length can be neutralized by the hydraulic chamber (3).

9. An injection valve according to any one of the preceding Claims, wherein the valve needle (7) is welded to a base plate (5) of the piezo actuator (4).

10. An injection valve according to any one of the preceding Claims, wherein the piezo actuator (4) is a piezoelectric multilayer actuator.

11. An injection valve according to any one of the preceding Claims, wherein the valve space (18) is sealed off from the actuator space (17) by means of a bellows, in particular a metal bellows (22) , which is linked on one side to the valve needle (7) and on the other to the housing (2).

## Revendications

1. Soupape d'injection pour un fluide sous pression, constituée d'un boîtier (2), avec:
- un compartiment de soupape (18) destiné à recevoir une aiguille de soupape (7), qui en association avec la paroi du boîtier constitue une soupape qui est fermée par des forces de résilience et qui doit être ouverte par une élongation d'un acteur piézo électrique précontraint (4) et d'un mouvement de levée correspondant de l'aiguille de soupape (7),
- un compartiment d'acteur (17), destiné à recevoir l'acteur piézo électrique (4), un piston hydraulique (1) agissant dans le sens longitudinal de l'acteur piézo électrique (4) soutenant l'acteur piézo électrique (4) sur le côté opposé à l'aiguille de soupape (4), formant un compartiment hydraulique (3), en association avec le boîtier (2) et le compartiment de l'acteur (17) étant étanchéifié par rapport à un fluide hydraulique par un élément d'étanchéité (11),
- un compartiment de compensation (13), qui est en liaison avec le compartiment hydraulique (3), tous deux étant remplis de fluide hydraulique et la liaison avec étant assurée par un orifice de jaugeage (12) ou par la combinaison d'une fente d'étanchéité (21) un trou de compensation (20), de façon à ce que le système compartiment hydraulique / compartiment de compensation / fluide hydraulique forme un palier à dynamique rigide pour l'acteur piézoélectrique et un élément de compensation de longueur pour des processus plus longs dans le temps, le fluide hydraulique étant sous pression.

2. Soupape d'injection selon la revendication 1, le fluide hydraulique étant fermé de façon étanche.

3. Soupape d'injection selon l'une quelconque des revendications précédentes, le fluide hydraulique étant une huile de silicone.

4. Soupape d'injection selon l'une quelconque des revendications précédentes, le fluide hydraulique étant exempt de bulles, dans son état initial.

5. Soupape d'injection selon l'une quelconque des revendications précédentes, la pression du fluide hydraulique se situant dans la plage comprise entre 1 bar et 5 bars.

6. Soupape d'injection selon l'une quelconque des revendications précédentes, la pression du fluide hydraulique étant fournie par les caractéristiques de résilience d'un soufflet métallique (14), destiné à étanchéifier le compartiment hydraulique (13).

7. Soupape d'injection selon l'une quelconque des revendications précédentes, un ressort (16) étant prévu en sus pour appliquer la pression.

8. Soupape d'injection selon l'une quelconque des revendications précédentes, la hauteur du compartiment hydraulique (3) dans le sens longitudinal de l'acteur piézo électrique étant conçue de façon à ce que la somme des tolérances de fabrication et des modifications thermiques de la longueur puisse être compensée par le compartiment hydraulique (3).

9. Soupape d'injection selon l'une quelconque des revendications précédentes, l'aiguille de soupape (7) étant soudée sur une plaque d'assise (5) de l'acteur piézo-électrique (4).

10. Soupape d'injection selon l'une quelconque des revendications précédentes, l'acteur piézo électrique étant un acteur piézo électrique multicouches.

11. Soupape d'injection selon l'une quelconque des revendications précédentes, dans laquelle la chambre de soupape (18) est étanchéifiée par rapport au compartiment de l'acteur (17) à l'aide d'un soufflet élastique, notamment d'un soufflet métallique (22) qui est articulé d'une part sur l'aiguille de soupape (7) et d'autre part sur le boîtier (2).
